# EUROPEAN PATENT SPECIFICATION

(11) **EP 2 664 232 B1**
(45) Date of publication and mention of the grant of the patent: **08.04.2015**
(21) Application number: 13168362.5
(22) Date of filing: 17.05.2013
(51) Int. Cl.: A01G 9/14, B60F 1/04

(54) **Tube rail cart**
Rohrschienenwagen
Chariot à rail-tubes

(30) Priority: 18.05.2012 BE 201200331
(43) Date of publication of application: 20.11.2013
(73) Proprietor: B&A Automation BVBA, 2320 Hoogstraten (BE)
(72) Inventor: Bogaerts, Joris, 2960 Brecht (BE)
(74) Representative: Van hunsel, Lieven M.S.

(56) References cited:
- EP-A1- 1 359 084
- EP-A1- 1 378 381
- WO-A1-2004/026599
- DE-A1-102004 057 951

## Description

The present invention concerns a tube rail cart.

Two way vehicles that run on rails and a ground substrate are commonly known, see e.g. WO2004/026599 A1.

In particular, the present invention concerns a tube rail cart designed to ride over tubes in a horticultural greenhouse, which tubes serve as rails, whereby the tube rail cart is provided with rail wheels and drive means for advancing the tube rail cart over the tubes.

Such tube rail carts are already known according to the present state of the art and they are used in horticulture to move caretakers through the horticultural greenhouse, for example to check the growth of the plants in the greenhouse and to take care of the plants, or to harvest plants or fruits and to convey these harvested plants or fruits.

The tubes over which such tube rail carts ride hereby consist of a pair of heating tubes which, just as the rails of a railway vehicle, run parallel through the greenhouse.

More specifically, such tubes are usually provided on the free path between the plant rows.

In practice, both tubes in a single path form a single continuous tube, and for this purpose are interconnected at the end of the path by means of a bend-shaped tube part.

When the plants which are accessible from a certain path have been treated or inspected, a tube rail cart will be driven from the tube rail onto a lower, hardened transverse path.

The tubes are usually arranged such that their bottom side reaches as high as the top side of the hardened transverse path.

The above-mentioned bend-shaped tube part at the end of each path usually rests more specifically on the upper surface of the hardened transverse path.

In addition, on the path, a tube rail is usually provided on support legs provided at regular distances.

A problem arising with the known tube rail carts is that the tubes of a tube rail bend, and depending on the position of the tube rail cart in relation to the support legs of the tube rail, said bending may be upward or downward.

Another problem arises when such known tube rail cart is driven from the tube rail onto the lower, hardened transverse path.

The user has to come down from the tube rail cart before or after the transition from the tube rails to the hardened transverse path.

Indeed, the usual drives and building structures for tube rail carts entail a sudden acceleration or deceleration during the transition from the tube rails to the hardened transverse path.

A conventional tube rail cart is provided with two pairs of rail wheels designed to rest on the tubes: one pair at the front and one pair at the rear of the tube rail cart.

Conventionally, these rail wheels are provided to that end with a semicircular concaved contact surface.

One pair of rail wheels is often carried out as what are called flanged wheels.

Flanged wheels are wheels having two functional outer diameters. As the name indicates, they are wheels with a semicircular concaved contact surface and additionally provided with a flange, such that they can rest on and cooperate with the tubes on the one hand, and can rest on a common substrate which is situated lower than the tubes on the other hand, the latter because of the flange's contact with the substrate.

It is common that at least one of the axes of the rail wheels is provided with a drive.

It is clear that the transition of a tube rail cart provided with flanged wheels entails an acceleration during the transition from the rails to the transverse path, also called the central path.

Apart from rail wheels, such tube rail carts are usually also provided with so-called manoeuvring wheels, designed for moving the tube rail cart when it is not located on the rails.

They may be castor wheels, one or two pairs of them for example, or two fixed wheels and two castor wheels, or four fixed wheels positioned perpendicular to the flanged wheels, or two centrally positioned fixed wheels.

Such manoeuvring wheels usually reach lower than the contact surface of the rail wheels which are designed to rest on the tubes.

In such a case, they are usually provided further away from each other and hence closer to the longitudinal side edges of the tube rail cart than the rail wheels, in such a manner that they do not form an obstruction when the tube rail cart is riding on the rails.

Indeed, as previously stated, the two tubes in a single path are in practice interconnected at the end of the path by means of a bend-shaped tube part.

This bend-shaped tube part can be avoided by providing the lower-reaching manoeuvring wheels at a larger mutual distance than the distance between both rails.

Alternatively, the manoeuvring wheels may be provided for example with a hydraulic lifting system, such that, in a retracted position, they can be moved over the bend-shaped tube part.

When the tube rail cart has been moved to the hardened transverse path, the tube rail cart must be moved to a following path. This is usually done manually.

By manoeuvring the tube rail cart, any castor wheels are directed in an appropriate manner, such that the displacement onto the transverse path can be continued up to the next path.

Additional manoeuvring in order to align the tube rail cart in relation to the set of tubes running through the path concerned subsequently enables the transition of the tube rail cart from the path to the set of tubes concerned.

In the context of the present invention, WO 2004/026599 which is related to a road-rail vehicle, may be considered relevant prior art. The road-rail vehicle, in particular a road-rail heavy goods vehicle, comprising a drive device for operating on rails, said device having a rail driving wheel, in addition to a friction drum that is coupled to the rail driving wheel via a gear. In order to drive the vehicle during an operation on rails, said drum can be placed against the peripheral surface of a road driving wheel of the road-rail vehicle by an actuating device, moving from a first operating position for roads into a second operating position for rails. The road-rail vehicle is characterised in that the gear contains a mechanical reversing gear, which, for a predetermined rotational direction of the road driving wheel, permits a reversal of the rotational direction of the rail driving wheel to achieve the forward or reverse travel of the vehicle.

The present invention aims to remedy the above-mentioned disadvantages of the known tube rail carts and possibly also other disadvantages.

To this end, the invention concerns a tube rail cart which can ride over a set of tubes or a tube rail, which tube rail cart includes a framework on which are provided at least four rail wheels, more specifically two rail wheels on a front axle and two rail wheels on a rear axle, whereby also drive means are provided on the framework for moving the tube rail cart over the tubes, whereby the drive means comprise at least a first drive wheel (11), provided between the front axle (4) and the rear axle (5), and a second drive wheel (12) having mutually different diameters, and either
- a motor (10) and, between the motor (10) and the first drive wheel (11), a first transmission with a first transmission ratio, and between the motor (10) and the second drive wheel (12), a second transmission with a second transmission ratio;
- or two motors, whereby a first motor is directly or indirectly connected to the first drive wheel (11), and whereby a second motor is directly or indirectly connected to the second drive wheel (12), and a control unit which can control the motors in an appropriate ratio;
in such a manner that both drive wheels (11, 12) can be driven at different but mutually coordinated rotational speeds, whereby the first drive wheel (11) is provided such on the framework (2) that it can cooperate with the tube rail (18), and whereby the second drive wheel (12) is provided such on the framework (2) that it can cooperate with the substrate, all this when the tube rail cart (1) is placed partly on the tube rail (18) and is situated partly on a common substrate.

As a result, the tubes of the tube rail will bend less, as the load is distributed over more points of support.

Given this bending, it is generally considered that with such an intermediate position of a drive wheel, the latter will not always make contact with the tube rail; however, it was found that thanks to the improved distribution of the load, the bending can be sufficiently restricted.

Another advantage which is thus obtained, is that the drive can also be used on a common substrate, and that the manoeuvring is significantly simplified thanks to the intermediate position of the drive wheel.

Another major advantage consists in that with such a tube rail cart, during the transition of the tube rails to a common substrate such as for example a hardened transverse path, sudden accelerations are prevented.

According to a preferred embodiment, the above-mentioned drive means comprise at least one drive set which includes a support arm on which are provided a motor and a first drive wheel, which support arm is pendulum-mounted or hinge-mounted and sprung-mounted on the framework.

Any possible bending of the rail tubes and/or unevenesses of a common substrate is/are thus set off. In other words, the drive wheel can at all times make contact with the tube rail and/or with the common substrate.

In order to better explain the characteristics of the invention, the following preferred embodiment of a tube rail cart according to the invention is described by way of example only without being limitative in any way, with reference to the accompanying drawings, in which:
figure 1 represents a side view of a tube rail cart according to the invention;
figure 2 represents a drive set as indicated by arrow F2 in figure 1 in more detail.

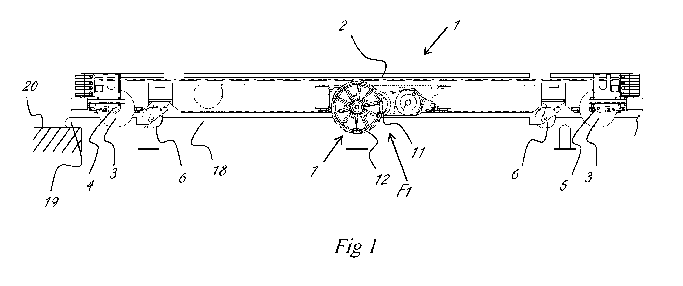

Figure 1 represents a tube rail cart 1, at least without representing the superstructure which can be accomplished in various ways, for example by providing a work platform which is adjustable in height.

The tube rail cart 1 includes a framework 2 onto which are provided four rail wheels 3, provided more specifically per pair here on a front axle 4 and a rear axle 5.

When reference is made, here and further, to front or rear, or any accompanying anterior or posterior part, the left side of the figure 1 should be regarded as front, and vice versa.

The rail wheels 3 have a semicircular concaved contact surface such that, when seen in side-view, as represented in figure 1, they keep the tube on which they rest partly hidden.

Note that the main support surface of such rail wheels 3 with a concaved contact surface is the most hidden part of the concaved contact surface.

Near each of the rail wheels 3 is provided a castor wheel 6, more specifically moved further away from each other here, and thus provided closer to the longitudinal side edges of the tube rail cart 1 than the rail wheels 3, at least in the outwardly pivoted position thereof.

Two drive sets 7 are provided here, mainly halfway through the front axle 4 and a rear axle 5, more specifically at an appropriate mutual distance, mainly corresponding to the mutual distance between the rail wheels 3 which are provided on one and the same axle.

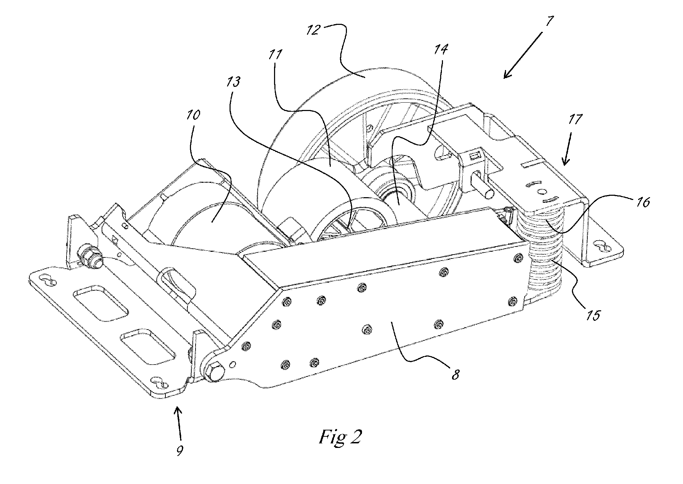

As is represented in more detail in figure 2, each drive set 7 comprises a support arm 8 which can be hinge-mounted or pendulum-mounted on the framework 2 of the tube rail cart 1.

A mounting bracket 9 is provided to this end in this embodiment, which can be provided on the framework 2 in a fixed manner and on which the support arm 8 can be pendulum-mounted, in this case at a far end of the support arm 8.

On the support arm 8 are further provided a motor 10, a first drive wheel 11 having a first diameter and a second drive wheel 12 having a second diameter, whereby the first diameter is smaller than the second diameter.

The first drive wheel 11 is provided on a first axle 13, whereas the second drive wheel 12 is provided on a second axle 14, which axles do not coincide here.

Between the motor 10 and the first drive wheel 11 is provided a first transmission, and between the motor 10 and the second drive wheel 12 is provided a second transmission with an accompanying first and second transmission ratio.

At the far end of the support arm 8 which is remote from the hinged connection of the support arm 8 to the framework 2, in this case remote from the mounting bracket 9, a spring 15 is provided between the support arm 8 and the framework 2.

The spring 15 more specifically is a coil spring 15 here, provided around a cylindrical sleeve 16 which is provided on a guide bracket 17 which can be solidly fixed to the framework 2.

In figure 1, the tube rail cart 1 is placed on a tube rail 18, which tube rail 18 is supported at regular distances by support legs 18B.

In this embodiment, as shown on the left in figure 1, the tube rail 18 is provided with a bend-shaped tube part 19 which connects the parallel tube parts of one and the same heating tube continuously.

The bend-shaped tube part 19 rests on a hardened transverse path 20 or intermediate path, for example made of concrete.

Consequently, the top surface of the transverse path 20 is situated lower than the top side of the tubes of the tube rail 18, more specifically 51 millimetres lower in this case.

The tubes of the tube rail 18 have an outer diameter of 51 millimetres here, but other common outer diameters are 45 millimetres or 57 millimetres.

The first diameter of the first drive wheel 11 and the second diameter of the second drive wheel 12 are such that the difference between both is at least equal to, but preferably larger than the double of the diameter of the tubes.

In this embodiment, the first drive wheel 11 has a first diameter equal to 125 millimetres, and the second drive wheel 12 has a second diameter equal to 250 millimetres. The difference of 125 millimetres is indeed larger than twice the diameter of the tubes, in this case 102 millimetres.

The working of the tube rail cart 1 according to figures 1 to 2 is simple and as follows.

When the tube rail cart 1 has been placed on the tube rail 18, it is clear that it can be moved thanks to the contact or the cooperation of the first drive wheel 11 with the tubes of the tube rail.

The tube rail cart 1 hereby not only rests on the rail wheels 3, but also on the centrally located first drive wheels 11 of both drive sets 7.

Note that the spring 15 presses the pendulum-mounted support arm 8 down at all times, in such a manner that even with downward bent rail tubes, the contact of the first drive wheel 11 with the tubes of the tube rail is still guaranteed.

It is a well-known problem that the tubes of a tube rail 18 bend, and depending on the position of the tube rail cart 1 in relation to the support legs 18B of the tube rail 18, this deflection can be upward or downward.

By an appropriate geometry, placement and assembly of the support arm 8 and the first drive wheel 11 provided thereon, it is possible for the latter to absorb both upward and downward clearances.

As long as the tube rail cart 1 is placed on the tube rail 18 and is situated at a distance from the transverse path 20, the castor wheels 6 will float on the outside of the tube rail 18, and also the second drive wheel 12 of each drive set 7 will float contact-free between the tubes of the tube rail 18.

During the transition of such tube rail cart 1 from the tube rail 18 to the transverse path 20, the front rail wheels 3 will first be moved past the bend-shaped tube part 19 and take place above the transverse path 20 in a free floating manner.

The front castor wheels 6 will possibly be the first to make contact with the transverse path 20, although not necessarily, for example if the tube rail cart 1 were to rest on first drive wheels 11 and on the rear rail wheels 3 during the transition.

As soon as the drive sets 7 come near the transverse path 20, the second drive wheels 12 will make contact with the transverse path 20.

Note that when the difference between the first diameter of the first drive wheel 11 and the second diameter of the second drive wheel 12 is larger than the double of the diameter of the tubes, there will even be contact when the first drive wheels 11 are situated at the tubular tube part 19.

The support arm 8 will be pushed upward until the final stop is reached, as a result of which the tube rail cart 1 is lifted somewhat.

Thanks to the appropriate transmission ratios of the first transmission between the motor 10 and the first drive wheel 11 on the one hand, and of the second transmission between the motor 10 and the second drive wheel 12 on the other hand, a sudden acceleration is prevented during this transition.

Indeed, the speed of the tube rail cart 1 corresponds to the rotational speed multiplied by half the diameter of the active drive wheel 11 or 12.

By making the ratio of the transmission ratios of the first transmission and the second transmission mainly correspond to the inverse ratio of the first diameter and the second diameter, the intended smooth transition from tube rail 18 to transverse path 20 is obtained.

The user of the tube rail cart 1 according to the invention must not even step down from the tube rail cart 1 before the transition from the tube rails 18 to the hardened transverse path 20 is made.

Once the tube rail cart 1 is situated entirely on the transverse path 20, which is obtained by moving the tube rail cart 1 mainly straight on as of the last-mentioned position, it will always rest entirely or partly on both second drive wheels 12, and optionally additionally on the front or rear set of castor wheels 6, or on both sets of castor wheels.

Indeed, the castor wheels 6 may have been provided at an appropriate height on the framework 2 to that end, adapted to the geometry, the dimensions and positioning of the support arm 8, the setting of the corresponding final stop and the diameter of the second drive wheel 12.

Note that the adjustability of the final stop also offers the possibility to use drive wheels 11 and 12 of the same dimensions for different tube diameters.

The tube rail cart 1 according to the invention can be further manoeuvred, for example turned and driven further and turned again in front of the next tube rail 18, by controlling the motors 10 of the drive sets 7 in an appropriate manner, i.e. differently if a turn is to be taken.

This simple control is an advantage which is obtained thanks to the positioning of the drive sets 7, i.e. between the front axle 4 and a rear axle 5.

In the embodiment as discussed, the drive sets 7 are provided mainly halfway between the front axle 4 and a rear axle 5, which position is preferred but not absolutely necessary.

This intermediate position of drive sets 7, here in particular also the predominantly central position thereof, is also advantageous in that the load of the tube rail cart 1, when it is put on the tube rail 18, is distributed over six points of support.

This entails less bending of the tubes on the one hand, and offers the possibility on the other hand, as mentioned earlier, partly thanks to the oscillating and sprung suspension of the support arm 8, to bring the first drive wheel 11 at all times into contact with the tubes of the tube rail in a flexible manner.

It is clear that the central position of the drive sets is not a requirement, however, to obtain a smooth transition for a tube rail cart 1 according to the invention from a tube rail 18 to a transverse path or any other conventional hardened surfaces.

Moreover, it is possible to provide the drive sets in front of or at the rear of the tube rail cart 1, for example in place of a set of rail wheels 3.

Moreover, it is also possible to provide only one drive set 7, or to provide only one motor 10 which drives two axles then with the first and second drive wheels 11 and 12 concerned on both far ends.

The option to include a differential again offers an improved controllability.

Moreover, the drive wheels 11 and 12 can also be provided on a single axle, whereby planetary transmissions are used to obtain the different transmission ratios.

It is also possible to provide a separate motor 10 per drive wheel 11 and 12.

The invention is by no means restricted to the represented embodiment of a tube rail cart 1 according to the invention, described by way of example and represented in the drawings; on the contrary, such a tube rail cart 1 according to the invention can be made in many different ways while still remaining within the scope of the appended claims.

## Claims

1. Tube rail cart (1) which can ride over a set of tubes or a tube rail (18), which tube rail cart (1) comprises a framework (2) on which are provided at least four rail wheels (3), more specifically two rail wheels (3) on a front axle (4) and two rail wheels (3) on a rear axle (5), whereby on the framework (2) are also provided drive means for moving the tube rail cart (1) over the tubes, , whereby the drive means comprise at least a first drive wheel (11), provided between the front axle (4) and the rear axle (5), **characterized in** that it further comprises a second drive wheel (12) wherein the first drive wheel (11) and the second drive wheel (12) having mutually different diameters, and either
- a motor (10) and, between the motor (10) and the first drive wheel (11), a first transmission with a first transmission ratio, and between the motor (10) and the second drive wheel (12), a second transmission with a second transmission ratio;
- or two motors, whereby a first motor is directly or indirectly connected to the first drive wheel (11), and whereby a second motor is directly or indirectly connected to the second drive wheel (12), and a control unit which can control the motors in an appropriate ratio;
in such a manner that both drive wheels (11, 12) can be driven at different but mutually coordinated rotational speeds, wherein the first drive wheel (11) is provided such on the framework (2) that it can cooperate with the tube rail (18), and whereby the second drive wheel (12) is provided such on the framework (2) that it can cooperate with the substrate, all this when the tube rail cart (1) is placed partly on the tube rail (18) and is situated partly on a common substrate.

2. Tube rail cart (1) according to claim 1, **characterised in that** the drive means comprise at least one drive set (7) including a support arm (8) on which are provided a motor (10) and a first drive wheel (11), which support arm (8) is pendulum-mounted or hinge-mounted and sprung-mounted on the framework (2).

3. Tube rail cart (1) according to claim 1 or 2, **characterised in that** the ratio of the rotational speeds of both drive wheels (11,12) mainly corresponds to the inverse ratio of respective diameters of the drive wheels (11, 12).

4. Tube rail cart (1) according to claim 1, 2 or 3, **characterised in that** the first drive wheel (11) and the second drive wheel (12) are provided on a first axle (13) and on a second axle (14)respectively.

5. Tube rail cart (1) according to one or several of claims 1 to 4, **characterised in that** the first drive wheel (11) and the second drive wheel (12) are provided on a single axle and **in that** the first transmission and second transmission are provided integrated in a planetary transmission.

6. Tube rail cart (1) according to one or several preceding claims 1 to 5, **characterised in that** several sets of a first drive wheel (11) and second drive wheel (12) are provided, all coupled to the same motor, possibly with intermediate differential.

7. Tube rail cart (1) according to one or several preceding claims 1 to 6, **characterised in that** the tube rail cart (1) comprises at least one drive set (7) which includes a support arm (8) on which are provided a motor (10), a first drive wheel (11), a second drive wheel (12), a first transmission with a first transmission ratio between the motor (10) and the first drive wheel (11), and a second transmission with a second transmission ratio between the motor (10) and the second drive wheel (12).

8. Tube rail cart (1) according to any of the claims 1 to 6, **characterised in that** the framework (2) is provided with castor wheels (6) which, in a position of use of the tube rail cart (1), reach lower than the rail wheels (3), whereby the support arm (8) is hinge-mounted on the framework (2) up to a final stop, and whereby the final stop is set such that, in a position of the support arm (8) up to the final stop, the second drive wheel (12) reaches lower than the castor wheels (6) in a position of use.

## Patentansprüche

1. Röhrenschienenwagen (1), der über einen Satz von Röhren oder eine Röhrenschiene (18) fahren kann, wobei der Röhrenschienenwagen (1) ein Gestellt (2) umfasst, auf dem mindestens vier Schienenräder (3) bereitgestellt sind, insbesondere zwei Schienenräder (3) auf einer Vorderachse (4) und zwei Schienenräder (3) auf einer Hinterachse (5), wobei auf dem Gestell (2) auch Antriebsmittel zum Bewegen des Röhrenschienenwagens (1) über die Röhren bereitgestellt sind, wobei die Antriebsmittel mindestens ein erstes Antriebsrad (11), bereitgestellt zwischen der Vorderachse (4) und der Hinterachse (5), umfasst, **dadurch gekennzeichnet, dass** er ferner ein zweites Antriebsrad (12) umfasst, wobei das erste Antriebsrad (11) und das zweite Antriebsrad unterschiedliche Durchmesser haben, und entweder
- einen Motor (10) und zwischen dem Motor (10) und dem ersten Antriebsrad (11) ein erstes Getriebe mit einem ersten Übersetzungsverhältnis, und zwischen dem Motor (10) und dem zweiten Antriebsrad (12) ein zweites Getriebe mit einem zweiten Übersetzungsverhältnis;
- oder zwei Motoren, wobei ein erster Motor direkt oder indirekt mit dem ersten Antriebsrad (11) verbunden ist, und wobei ein zweiter Motor direkt oder indirekt mit dem zweiten Antriebsrad (12) verbunden ist, und eine Steuereinheit, die den Motor in einem geeigneten Verhältnis steuern kann;
in einer solchen Weise, dass beide Antriebsräder (11,12) mit verschiedenen aber miteinander koordinierten Drehzahlen angetrieben werden können, wobei das erste Antriebsrad (11) so auf dem Gestell (2) bereitgestellt ist, dass es mit der Röhrenschiene (18) zusammenarbeiten kann, und wobei das zweite Antriebsrad (12) so auf dem Gestell (2) bereitgestellt ist, dass es mit dem Substrat zusammenarbeiten kann, dies alles wenn der Röhrenschienenwagen (1) teilweise auf die Röhrenschiene (18) platziert wird und teilweise auf einem gemeinsamen Substrat angeordnet ist.

2. Röhrenschienenwagen (1) nach Anspruch 1, **dadurch gekennzeichnet, dass** die Antriebsmittel mindestens einen Antriebssatz (7) umfassen, einschließlich eines Trägerarms (8), auf dem ein Motor (10) und ein erstes Antriebsrad (11) bereitgestellt sind, welcher Trägerarm (8) pendelnd oder schwenkbar und federnd an dem Gestell (2) montiert ist.

3. Röhrenschienenwagen (1) nach Anspruch 1 oder 2, **dadurch gekennzeichnet, dass** das Verhältnis der Drehzahlen beider Antriebsräder (11, 12) hauptsächlich dem umgekehrten Verhältnis jeweiliger Durchmesser der Antriebsräder (11, 12) entspricht.

4. Röhrenschienenwagen (1) nach Anspruch 1, 2 oder 3, **dadurch gekennzeichnet, dass** das erste Antriebsrad (11) und das zweite Antriebsrad (12) auf einer ersten Achse (13) bzw. auf einer zweiten Achse (14) bereitgestellt sind.

5. Röhrenschienenwagen (1) nach einem oder mehreren der Ansprüche 1 bis 4, **dadurch gekennzeichnet, dass** das erste Antriebsrad (11) und das zweite Antriebsrad (12) auf einer einzigen Achse bereitgestellt werden und dass das erste Getriebe und das zweite Getriebe integriert in einem Planetengetriebe bereitgestellt werden.

6. Röhrenschienenwagen (1) nach einem oder mehreren der vorhergehenden Ansprüche 1 bis 5, **dadurch gekennzeichnet, dass** mehrere Sätze eines ersten Antriebsrades (11) und eines zweiten Antriebsrades (12) bereitgestellt werden, alle gekoppelt an denselben Motor, möglicherweise mit einem Zwischendifferenzial.

7. Röhrenschienenwagen (1) nach einem oder mehreren der vorhergehenden Ansprüche 1 bis 6, **dadurch gekennzeichnet, dass** der Röhrenschienenwagen (1) mindestens einen Antriebssatz (7) umfasst, der einen Trägerarm (8) umfasst, auf dem ein Motor (10), ein erstes Antriebsrad (11), ein zweites Antriebsrad (11), ein zweites Antriebsrad (12), ein erstes Getriebe mit einem ersten Übersetzungsverhältnis zwischen dem Motor (10) und dem ersten Antriebsrad (11) und ein zweites Getriebe mit einem zweiten Übersetzungsverhältnis zwischen dem Motor (10) und dem zweiten Antriebsrad (12) bereitgestellt sind.

8. Röhrenschienenwagen (1) nach einem der Ansprüche 1 bis 6, **dadurch gekennzeichnet, dass** das Gestell (2) mit Lenkrollen (6) versehen ist, die in einer Verwendungsposition des Röhrenschienenwagens (1) tiefer reichen als die Schienenräder (3), wobei der Trägerarm (8) schwenkbar bis zu einem Endanschlag an dem Gestell (2)montiert ist, und wobei der Endanschlag so eingestellt ist, dass in einer Position des Trägerarms (8) bis zu dem Endanschlag das zweite Antriebsrad (12) tiefer reicht als die Lenkräder (6) in einer Verwendungsposition.

## Revendications

1. Chariot pour rails tubulaires (1) capable de circuler sur un jeu de tubes ou un rail tubulaire (18), lequel chariot pour rails tubulaires (1) comprend un châssis (2) qui est équipé d'au moins quatre roues pour rails (3), plus spécifiquement deux roues pour rails (3) sur un essieu avant (4) et deux roues pour rails (3) sur un essieu arrière (5), dans lequel le châssis (2) est également équipé de moyens d'entraînement destinés à déplacer le chariot pour rails tubulaires (1) sur les tubes, dans lequel les moyens d'entraînement comprennent au moins une première roue d'entraînement (11), disposée entre l'essieu avant (4) et l'essieu arrière (5), **caractérisé en ce qu'**il comprend également une seconde roue d'entraînement (12), où la première roue d'entraînement (11) et la seconde roue d'entraînement (12) ont des diamètres mutuellement différents et soit
- Un moteur (10) et, entre le moteur (10) et la première roue d'entraînement (11), une première transmission avec un premier rapport de transmission, et entre le moteur (10) et la seconde roue d'entraînement (12), une seconde transmission avec un second rapport de transmission ;
- ou deux moteurs, où un premier moteur est directement ou indirectement connecté à la première roue d'entraînement (11), et où un second moteur est directement connecté à la seconde roue d'entraînement (12), et une unité de commande qui peut commander les moteurs dans un rapport adéquat ;
de telle manière que les deux roues d'entraînement (11, 12) peuvent être actionnées à des vitesses de rotation différentes, mais mutuellement coordonnées, où la première roue d'entraînement (11) est disposée de telle sorte sur le châssis (2) qu'elle peut coopérer avec le rail tubulaire (18), et où la seconde roue d'entraînement (12) est disposée de telle sorte sur le châssis (2) qu'elle peut coopérer avec le substrat, tout ceci lorsque le chariot pour rails tubulaires (1) est placé partiellement sur le rail tubulaire (18) et situé partiellement sur un substrat commun.

2. Chariot pour rails tubulaires (1) selon la revendication 1, **caractérisé en ce que** les moyens d'entraînement comprennent au moins un dispositif d'entraînement (7) comprenant un bras de support (8) sur lequel sont montés un moteur (10) et une première roue d'entraînement (11), lequel bras de support (8) est monté de manière pendulaire ou avec des charnières et des ressorts sur le châssis (2).

3. Chariot pour rails tubulaires (1) selon la revendication 1 ou 2, **caractérisé en ce que** le rapport entre les vitesses de rotation des deux roues d'entraînement (11, 12) corresponde principalement au rapport inverse des diamètres respectifs des roues d'entraînement (11, 12).

4. Chariot pour rails tubulaires (1) selon la revendication 1, 2 ou 3, **caractérisé en ce que** la première roue d'entraînement (11) et la seconde roue d'entraînement (12) sont disposées respectivement sur un premier essieu (13) et sur un second essieu (14).

5. Chariot pour rails tubulaires (1) selon une ou plusieurs des revendications 1 à 4, **caractérisé en ce que** la première roue d'entraînement (11) et la seconde roue d'entraînement (12) sont disposées sur un seul essieu et **en ce que** la première transmission et la seconde transmission sont intégrées dans une transmission planétaire.

6. Chariot pour rails tubulaires (1) selon une ou plusieurs des revendications 1 à 5 précédentes, **caractérisé en ce que** plusieurs jeux d'une première roue d'entraînement (11) et d'une seconde roue d'entraînement (12) sont fournis, tous couplés au même moteur, éventuellement avec un différentiel intermédiaire.

7. Chariot pour rails tubulaires (1) selon une ou plusieurs des revendications 1 à 6 précédentes, **caractérisé en ce que** le chariot pour rails tubulaires (1) comprend au moins un dispositif d'entraînement (7) qui comprend un bras de support (8) sur lequel sont montés un moteur (10), une première roue d'entraînement (11), une seconde roue d'entraînement (12), une première transmission avec un premier rapport de transmission entre le moteur (10) et la première roue d'entraînement (11), et une seconde transmission avec un second rapport de transmission entre le moteur (10) et la seconde roue d'entraînement (12).

8. Chariot pour rails tubulaires (1) selon l'une quelconque des revendications 1 à 6, **caractérisé en ce que** le châssis (2) est équipé de roues pivotantes (6) qui, dans une position d'utilisation du chariot pour rails tubulaires (1), s'étendent plus bas que les roues pour rails (3), où le bras de support (8) est monté avec des charnières sur le châssis (2) jusqu'à une butée finale, et où la butée finale est placée de telle manière que, dans une position du bras de support (8) jusqu'à la butée finale, la seconde roue d'entraînement (12) s'étend plus bas que les roues pivotantes (6) dans une position d'utilisation.
